# EUROPÄISCHE PATENTSCHRIFT

(11) **EP 3 740 706 B1**
(45) Veröffentlichungstag und Bekanntmachung des Hinweises auf die Patenterteilung: **08.05.2024**
(21) Anmeldenummer: 19700789.1
(22) Anmeldetag: 14.01.2019
(51) Int. Cl.: F16J 15/324, B60B 27/00, F16C 33/78, F16J 15/3264

(54) **DICHTUNGSANORDNUNG FÜR EINE RADLAGERANORDNUNG EINES KRAFTFAHRZEUGS**
SEALING ARRANGEMENT FOR A WHEEL BEARING ARRANGEMENT OF A MOTOR VEHICLE
ENSEMBLE D'ÉTANCHÉITÉ POUR UN ENSEMBLE DE ROULEMENT DE ROUE D'UN VÉHICULE AUTOMOBILE

(30) Priorität: 15.01.2018 DE 102018200603
(43) Veröffentlichungstag der Anmeldung: 25.11.2020
(73) Patentinhaber: Audi AG, 85045 Ingolstadt (DE)
(72) Erfinder: ALBL, Johannes, 85055 Ingolstadt (DE); FRISCH, Michael, 94513 Schönberg (DE)
(86) Internationale Anmeldenummer: PCT/EP2019/050816
(87) Internationale Veröffentlichungsnummer: WO 2019/138109

(56) Entgegenhaltungen:
- DE-A1-102012 001 379
- JP-A- 2003 262 231
- JP-A- 2005 048 801
- JP-A- 2006 214 920
- JP-A- 2009 180 366

## Beschreibung

Die Erfindung betrifft eine Dichtungsanordnung für eine Radlageranordnung eines Kraftfahrzeugs gemäß der im Oberbegriff des Patentanspruches 1 angegebenen Art.

Bekanntlich ist den Radlagern eines Kraftfahrzeugs für gewöhnlich eine zwischen einem feststehenden Bauteil der Radlageranordnung und einem rotierenden Bauteil der Radlageranordnung wirksame Dichtungsanordnung zugeordnet, die in der Regel einen Dichtungskörper mit einer Dichtlippe umfasst, wobei der Dichtungskörper an dem feststehenden Bauteil der Radlageranordnung angeordnet ist und die Dichtlippe an einer am rotierenden Bauteil der Radlageranordnung ausgebildeten Dichtfläche anliegt. Lediglich beispielhaft wird auf die DE 101 32 429 A1 verwiesen.

Je nach Ausgestaltung der Radlageranordnung kann dabei die Dichtlippe des Dichtungskörpers entweder unmittelbar auf der Radnabe oder alternativ auf einem Edelstahl-Schleuderblech anliegen bzw. umlaufen. Voraussetzung zum Erhalt der Dichtwirkung ist dabei, dass die Dichtfläche auf der die Dichtlippe anliegt bzw. umläuft, eine hohe, weitgehend definierte Oberflächengüte aufweist, um den sogenannten Fördereffekt, nämlich ein Eintreten von Wasser unter der Dichtlippe, zu verhindern. Im Falle des unmittelbaren Umlaufens der Dichtlippe auf der Radnabe bedeutet dies, dass die Radnabe in diesem Bereich entsprechend bearbeitet bzw. geschliffen werden muss, um die erforderliche Oberflächengüte sicherzustellen. Dies erweist sich als nachteilig, da der hierzu erforderliche Schleifprozeß zusätzliche Kosten verursacht und man dadurch in der Wahl der Geometrie nicht frei ist, da die Schleifsteine radial nach innen zur Radlagerdrehachse geführt werden müssen. Auch die Variante des Umlaufens der Dichtlippe auf einem Edelstahl-Schleuderblech erweist sich nachteilig, da für die Befestigung des Edelstahl-Schleuderblechs auf der Radnabe in der Regel ein geschliffener, langer, zylindrischer Presssitz erforderlich ist, der wiederum entsprechend kostenintensiv in der Herstellung ist. Weitere Nachteile dieser Variante sind, dass das Schleuderblech sowohl in axialer als auch in radialer Richtung verhältnismäßig viel Bauraum benötigt und dass eine Unterrostung am statischen Presssitz auftreten kann.

Die JP 2003-262231 A beschreibt eine Dichtung für Wälzlager, wobei die Gleitkontaktoberfläche einer Aushärtungsbehandlung unterzogen oder mit einem harten Film überzogen wird, der korrosionsbeständig ist und die Eigenschaften eines Rostschutzes aufweist. Nach der Offenbarung der JP 2003-262231 A wird dabei der harte Film mittels eines Beschichtungsverfahren, insbesondere mittels des PVD-Verfahrens (physical vapour depostion) oder des CVD-Verfahrens (chemical vapour depostion) auf die Gleitkontaktoberfläche aufgebracht.

Die DE 10 2012 001 379 A1 offenbart eine Kraftfahrzeugstarrachse mit zumindest einem Achszapfen und zumindest einer auf dem Achszapfen angeordneten Dichtung. Die Kraftfahrzeugachse zeichnet sich insbesondere dadurch aus, dass ein korrosionsbeständiges Element vorgesehen ist, das zumindest eine Kontaktfläche ausbildet, auf der die zumindest eine Dichtung dichtend anliegt. Das korrosionsbeständige Element kann dabei als eine korrosionsbeständige Beschichtung, als ein separates Element mit einer korrosionsbeständigen Beschichtung oder als ein separates Element aus einem korrosionsbeständigen Material ausgebildet sein.

Der Erfindung liegt die Aufgabe zugrunde, eine Dichtungsanordnung für eine Radlageranordnung eines Kraftfahrzeugs gemäß der im Oberbegriff des Patentanspruches 1 angegebenen Art derart weiterzubilden, dass bei geringen Kosten und geringem Bauraumbedarf eine sehr gute Dichtungsperformance gewährleistet ist.

Diese Aufgabe wird durch die kennzeichnenden Merkmale des Patentanspruches 1 in Verbindung mit seinen Oberbegriffsmerkmalen gelöst.

Die Unteransprüche bilden vorteilhafte Weiterbildungen der Erfindung.

In bekannter Art und Weise umfasst die Dichtungsanordnung für eine Radlageranordnung eines Kraftfahrzeugs einen eine Dichtlippe aufweisenden Dichtungskörper, der an einem feststehenden Bauteil der Radlageranordnung angeordnet ist, und dessen Dichtlippe auf ein rotierendes Bauteil der Radlageranordnung ausgerichtet ist und im schleifenden Kontakt mit einer Dichtfläche am rotierenden Bauteil der Radlageranordnung steht.

Erfindungsgemäß ist auf die Dichtfläche eine Folie aufgebracht, mit der dann die Dichtlippe im schleifenden Kontakt steht bzw. auf der die Dichtlippe läuft. Die erfindungsgemäß vorgesehene Folie weist dabei eine Schichtdicke (d) von d≤ 0,3mm und eine Oberflächengüte mit einer Rautiefe (Rz) von Rz<10µm auf. Zudem ist erfindungsgemäß vorgesehen, dass die Folie mittels Verkleben stoffschlüssig oder mittels Aufschrumpfen kraftschlüssig mit der Dichtfläche verbunden ist.

Unter der Formulierung Folie soll nachfolgend ganz allgemein eine dünne Schicht eines Werkstoffes/Materials mit einer Schichtdicke ≤ 0,3mm verstanden werden.

Vorteilhaft an der erfindungsgemäßen Ausgestaltung ist, dass durch entsprechende Wahl der Folie bzw. der Oberflächengüte der Folie nunmehr auf eine einfache Art und Weise eine reibungsoptimierte Einstellung der Oberfläche der Dichtfläche ermöglicht ist. Insbesondere hat die Oberflächengüte mit einer Rautiefe von Rz<10µm den positiven Effekt, dass ein geringer Verschleiß mit guten Reibeigenschaften kombiniert werden kann. Ein weiterer Vorteil der erfindungsgemäßen Ausgestaltung ist, dass - da nunmehr kein Schleifprozess bzw. zylindrischer Sitz für die Schleuderscheibe notwendig ist - eine deutliche kostengünstigere Herstellung sichergestellt ist und dass deutlich weniger Bauraum benötigt wird (=> kein verschenkter Bauraum für Schleuderblech in axialer und radialer Richtung). Ein weiterer Vorteil ist, da - die Folie mittels Verkleben stoffschlüssig bzw. mittels Aufschrumpfen kraftschlüssig mit der Dichtfläche verbunden ist - eine kostengünstige, schnell durchzuführende Befestigung der Folie auf der Dichtfläche gewährleistet ist.

Bevorzugt ist die Folie dünnschichtig, mit einer Schichtdicke ≤ 0,2mm, vorzugsweise ≤ 0,1mm ausgebildet.

Gemäß einer besonders vorteilhaften Ausführungsform der Erfindung ist die Folie aus Kunststoff, korrosionsarmen Metall oder Verbundmaterial ausgebildet. Neben hoher Korrosionsbeständigkeit ist hierdurch insbesondere auch eine gute Verformbarkeit der Folie sichergestellt. Vorteilhaft ist zudem, dass aufgrund obiger Ausgestaltung die Folie verschleißarm ist und damit eine lange Lebensdauer gewährleistet ist.

Vorzugsweise handelt es sich bei dem feststehenden Bauteil der Radlageranordnung um einen feststehenden Lagerring eines Wälzlagers und bei dem die Dichtfläche aufweisenden rotierenden Bauteil der Radlageranordnung um eine Radnabe.

Eine besonders kompakte und bauraumsparende Ausführungsform zeichnet sich dadurch aus, dass in die Radnabe eine sich in axialer Richtung erstreckende, umlaufende Nut eingebracht ist, deren Bodenfläche bzw. deren Nutgrund die die Folie aufweisende Dichtfläche bildet.

Weitere Vorteile und Anwendungsmöglichkeiten der vorliegenden Erfindung ergeben sich aus der nachfolgenden Beschreibung in Verbindung mit den in der Zeichnung dargestellten Ausführungsbeispielen.

In der Zeichnung bedeutet:
- Fig. 1: eine Seitenansicht einer Dichtungsanordnung für eine Radlageranordnung eines Kraftfahrzeugs nach dem Stand der Technik;
- Fig. 2: eine vergrößerte Darstellung des eingekreisten Ausschnitts aus Fig. 1, und
- Fig. 3: eine erfindungsmäße Ausführung der Dichtungsanordnung.

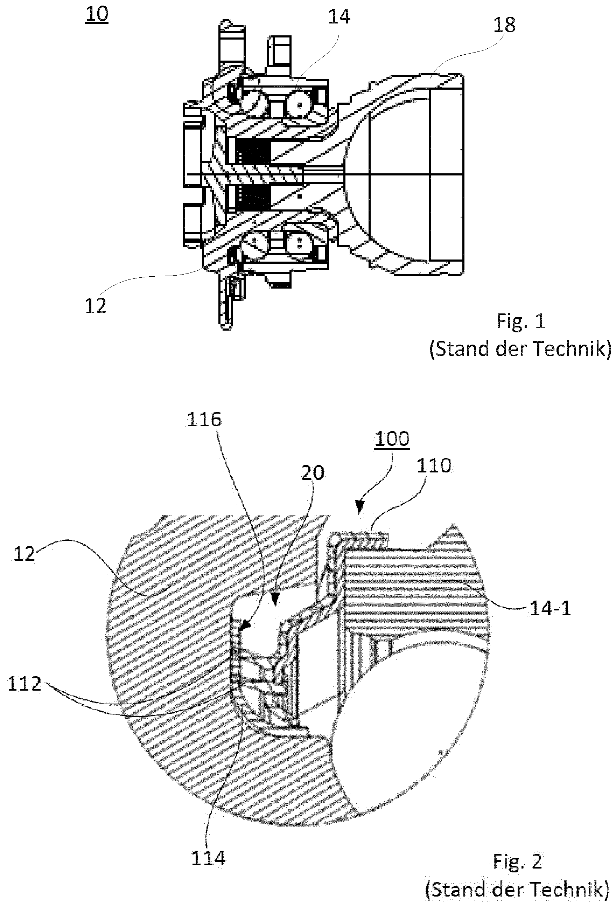

Fig. 1 zeigt eine insgesamt mit der Bezugsziffer 10 bezeichnete Radlageranordnung eines Kraftfahrzeugs. In bekannter Art und Weise ist eine Radnabe 12 über ein Wälzlager 14 drehbar gelagert. Die Radnabe 12 ist ihrerseits mit einer Gelenkwelle 18 trieblich verbunden.

Dabei ist - wie Fig. 1 und Fig. 2 zeigen - zwischen dem rotierenden Bauteil der Radlageranordnung 10, hier der Radnabe 12 - und dem feststehenden Bauteil der Radlagerung 10, hier der feststehende Lagerring 14-1 des Wälzlagers 14, eine insgesamt mit der Bezugsziffer 100 bezeichnete Dichtungsanordnung angeordnet.

Die Dichtungsanordnung 100 umfasst einen aus einem Elastomer ausgebildeten, am feststehenden Lagerring 14-1 des Wälzlagers 14 gelagerten Dichtungskörper 110 mit zwei Dichtlippen 112. Wie insbesondere Fig. 2 zu entnehmen ist, liegen dabei die Dichtlippen 112 unter Vorspannung an einem in einer Nut 20 der Radnabe 12 angeordneten, mit der Radnabe 12 drehfest befestigten, aus Edelstahl ausgebildeten Schleuderblech 114 an. D.h. die Dichtlippen 112 stehen im schleifenden Kontakt mit der am Schleuderblech ausgebildeten, rotierenden Dichtfläche 116.

Nachteilig an dem Stand der Technik ist insbesondere, dass aufgrund des Schleuderblechs 114 die Dichtungsanordnung 100 kostenintensiv in der Herstellung (Einbau Schleuderblech) ist und dass das Schleuderblech 114 verhältnismäßig viel Bauraum in axialer und radialer Richtung a, r benötigt.

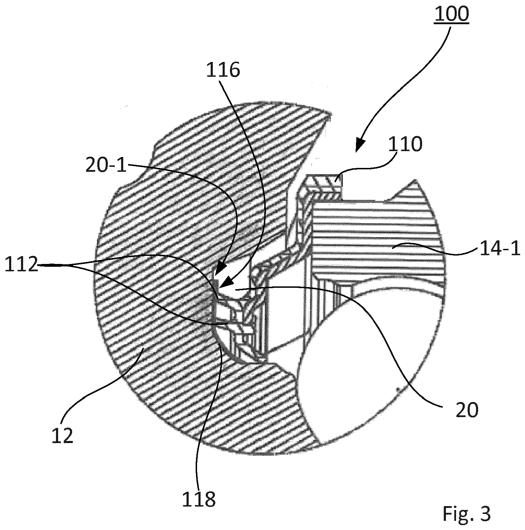

Hier setzt nun die Erfindung ein:
Wie Fig. 3 zeigt, ist der Nutgrund 20-1 der Nut 20 in der Radnabe 12 mit einer Folie 118 versehen. D.h. die Dichtlippen 112 stehen im schleifenden Kontakt mit der die rotierende Dichtfläche 116 bildenden Folie 118. Vorliegend handelt es sich bei der Folie 118 um eine Folie aus einem Verbundwerkstoff mit einer Schichtdicke <0,2mm, die mittels Verkleben und damit besonders kostengünstig am Nutgrund 20-1 der Nut 20 der Radnabe 12 befestigt wurde.

Mittels der Folie 118 ist nunmehr in vorteilhafter Weise die für eine optimale Dichtwirkung notwendige, reibungsoptimierte Einstellung der Dichtungselemente Dichtlippen 112 und Dichtfläche 116 auf eine einfache Art und Weise ermöglicht.

Der Vollständigkeit halber wird darauf hingewiesen, dass die Nut 20 sowohl in axialer Richtung a als auch in radialer Richtung r nunmehr auch deutlich kleiner ausgebildet werden kann, so dass die erfindungsgemäße Dichtungsanordnung 100 auch deutlich weniger Bauraum benötigt.

## Patentansprüche

1. Radlageranordnung (10) für ein Kraftfahrzeug, wobei die Radlageranordnung (10) ein rotierendes Bauteil (12), ein feststehendes Bauteil (14-1) sowie eine Dichtungsanordnung umfasst, wobei die Dichtungsanordnung einen Dichtungskörper (110) mit einer Dichtlippe (112) umfasst, wobei der Dichtungskörper (110) an dem feststehenden Bauteil (14-1) der Radlageranordnung (10) angeordnet ist und die Dichtlippe (112) an einer Dichtfläche (116) des rotierenden Bauteils (12) der Radlageranordnung (100) anliegt,
**dadurch gekennzeichnet, dass**
auf die Dichtfläche (116) eine Folie (118) aufgebracht ist, die eine Schichtdicke (d) von d ≤0,3 mm und eine Oberflächengüte mit einer Rautiefe (Rz) von Rz ≤ 10µm aufweist, wobei die Folie (118) mittels Verkleben stoffschlüssig oder mittels Aufschrumpfen kraftschlüssig mit der Dichtfläche (116) verbunden ist.

2. Radlageranordnung (10) nach Anspruch 1,
**dadurch gekennzeichnet, dass**
die Folie (118) aus Kunststoff, Metall oder Verbundmaterial ausgebildet ist.

3. Radlageranordnung (10) nach einem der vorgenannten Ansprüche,
**dadurch gekennzeichnet, dass**
es sich bei dem feststehenden Bauteil der Radlageranordnung (10) um einen feststehenden Lagerring (14-1) eines Wälzlagers (14) und bei dem die Dichtfläche (116) aufweisenden rotierenden Bauteil der Radlageranordnung (10) um eine Radnabe (12) handelt.

4. Radlageranordnung (10) nach Anspruch 3,
**dadurch gekennzeichnet, dass**
die Radnabe (12) eine sich in axialer Richtung (a) erstreckende, umlaufende Nut (20) aufweist, deren Nutgrund (20-1) die Dichtfläche (116) bildet.

## Claims

1. Wheel bearing arrangement (10) for a motor vehicle, wherein the wheel bearing arrangement (10) has a rotating component (12), a fixed component (14-1), as well as a sealing arrangement, wherein the sealing arrangement comprises a sealing body (110) with a sealing lip (112), wherein the sealing body (110) is arranged at the fixed component (14-1) of the wheel bearing arrangement (10) and the sealing lip (112) rest on a sealing surface (116) of the rotating component (12) of the wheel bearing arrangement (100),
**characterised in that**
on the sealing surface (116) is applied a film (118) which has a layer thickness (d) of d ≤ 0,3 mm and a surface quality with a roughness depth (Rz) of Rz ≤ 10µm, wherein the film (118) is connected by means of adhesive bonding in a material-fitting manner or by means of shrink fitting in a force-fitting manner to the sealing surface (116).

2. Wheel bearing arrangement (10) according to claim 1,
**characterised in that**
the film (118) is made of plastic, metal or composite material.

3. Wheel bearing arrangement (10) according to any of the aforementioned claims,
**characterised in that**
the fixed component of the wheel bearing arrangement (10) is a fixed bearing ring (14-1) of a roller bearing (14) and the rotating component of the wheel bearing arrangement (10) having the sealing surface (116) is a wheel hub (12).

4. Wheel bearing arrangement (10) according to claim 3,
**characterised in that**
the wheel hub (12) has a circumferential groove (20) extending an axial direction (a), the groove base (20-1) of which forms the sealing surface (116).

## Revendications

1. Ensemble de palier de roue (10) pour un véhicule automobile, dans lequel l'ensemble de palier de roue (10) comprend un composant rotatif (12), un composant fixe (14-1) ainsi qu'un ensemble d'étanchéité, dans lequel l'ensemble d'étanchéité comprend un corps d'étanchéité (110) avec une lèvre d'étanchéité (112), dans lequel le corps d'étanchéité (110) est agencé au niveau du composant fixe (14-1) de l'ensemble de palier de roue (10) et la lèvre d'étanchéité (112) repose contre une surface d'étanchéité (116) du composant rotatif (12) de l'ensemble de palier de roue (100),
**caractérisé en ce que**
un film (118) est appliqué sur la surface d'étanchéité (116), film qui présente une épaisseur de couche (d) de d ≤ 0,3 mm et une qualité de surface avec une profondeur de rugosité (Rz) de Rz ≤ 10 µm, dans lequel le film (118) est relié par collage par matière ou par frettage à force à la surface d'étanchéité (116).

2. Ensemble de palier de roue (10) selon la revendication 1,
**caractérisé en ce que**
le film (118) est réalisé en matière plastique, en métal ou en matériau composite.

3. Ensemble de palier de roue (10) selon l'une quelconque des revendications précédentes,
**caractérisé en ce que**
il s'agit pour le composant fixe de l'ensemble de palier de roue (10) d'une bague de palier (14-1) fixe d'un palier à roulement (14) et il s'agit pour le composant tournant présentant la surface d'étanchéité (116) de l'ensemble de palier de roue (10) d'un moyeu de roue (12).

4. Ensemble de palier de roue (10) selon la revendication 3,
**caractérisé en ce que**
le moyeu de roue (12) présente une rainure (20) périphérique s'étendant dans le sens axial (a), dont le fond de rainure (20-1) forme la surface d'étanchéité (116).
